# EUROPÄISCHE PATENTSCHRIFT

(11) **EP 0 436 842 B1**
(45) Veröffentlichungstag und Bekanntmachung des Hinweises auf die Patenterteilung: **09.02.1994**
(21) Anmeldenummer: 90123507.7
(22) Anmeldetag: 07.12.1990
(51) Int. Cl.: E04C 2/16, C04B 28/02, E04C 2/34

(54) **Bausatz aus Leichtbauteilen für Wände, Stützen, Decken und sonstigen Bauteilen**
Building kit consisting of light weight elements for walls, pillars, ceilings and the like building elements
Set d'éléments légers de construction pour murs, piliers, plafonds et autres éléments de construction

(30) Priorität: 11.01.1990 DE 9000238 U
(43) Veröffentlichungstag der Anmeldung: 17.07.1991
(73) Patentinhaber: Kakuk, Stefan, D-68794 Oberhausen-Rheinhausen (DE)
(72) Erfinder: Kakuk, Stefan, D-68794 Oberhausen-Rheinhausen (DE)
(74) Vertreter: Ratzel, Gerhard, Dr.

(56) Entgegenhaltungen:
- EP-A- 0 049 733
- EP-A- 0 269 990
- DE-A- 2 411 864
- GB-A- 1 603 625
- JAPANESE PATENTS GAZETTE Section CH, week 8251, 11 November 1982 class L, no.82-10111j 51 , Derwent Publications Ltd., London, & JP-A-57183351 (ASAHI CHEMICAL IND KK) 5-7-81
- JAPANESE PATENTS GAZETTE section CH, week 8115, 20 February 1981 class A ,no. 81-26483d 15 , Derwent Publications Ltd., London, & JP-A-56017966 (ASAHI CHEMICAL IND KK) 24-7-79
- JAPANESE PATENTS GAZETTE Section CH, week 8945, 27 September 1989 class L, no.89-327557 45 , Derwent Publications Ltd., London, & JP-A-1242452 (KUBOTA KK) 23-3-88

## Beschreibung

Die vorliegende Erfindung betrifft einen Bausatz aus extrudierten Leichtbauteilen für Wände, Stützen, Decken und sonstige Bauteile, bestehend aus
a) unbehandeltem gehäckseltem Stroh und/oder Getreidespreu und/oder Reisschalen und/oder Steinfasern und/oder Glasfasern,
b) Bindemittel, nämlich Zement und/oder Kalk und/ oder Gips und
c) mineralischen Zuschlagstoffen.

Durch die immer höheren Anforderungen an Schall-, Feuer- und Wärmedämmung, sollen heute verwendete Baustoffe weit höhere Werte als die DIN vorschreibt aufweisen und darüber hinaus bei der Verarbeitung wirtschaftliche Eigenschaften aufweisen. Trotz großflächigen Formen, dürfen Bauteile den Architekten und Planer nicht an bestimmten Maßen, Raster oder Serie binden.

So ist auch von Vorteil, wenn diese Baustoffe absolut nicht brennbar sind, sogar feuerhemmend wirken und bei Brand keine Rauchentwicklung und sonstige unzulässige Gase entstehen.

Die Baustoffe müssen atmungsfähig, wasserfest, frost- und alterungsbeständig sein. Ferner müssen die Baustoffe absolut ihre Raumform behalten und sogar bei extremsten Bedingungen nicht durch Verformung, Schwinden oder Quellen die Raumform verändern.

Die Bauteile sollen vorzugsweise im trockenen Verfahren wie Schrauben, Nageln, Klammern oder Kleben unter Einsatz von einfachen Handwerkzeugen wie Säge, Bohrer, Schleifmaschine usw. und ohne Einsatz von Hebewerkzeugen oder Maschinen zu bearbeiten sein und eine fertige Oberfläche haben bzw. endbeschichtet sein. Nicht zuletzt müssen die verwendeten Bauteile den erforderlichen statischen Verhältnissen gerecht werden.

Die Bauteile sollen durch ihre Formgebung und Beschaffenheit vielfältig einsetzbar sein und dem Planer in Bezug auf Maße und architektonische Gestaltung, uneingeschränkte Möglichkeiten bieten.

Die heute verwendeten Bauteile und Verblendschalen entsprechen nicht oder nur teilweise diesen Anforderungen.

Zum nächstkommenden Stand der Technik sind zu nennen:
- D1,: nämlich Japanese Patents Gazette, Section CH, week DW 8251, No. 82-10111j (JP-A-57 183 351)
- D2,: nämlich Japanese Patents Gazette, Section CH, week DW 8115, No. 81-26483d (JP-A-56 017 966)
- D3,: nämlich EP-A-0 269 990.

Dokument D1 beschreibt eine leichtgewichtige faserverstärkte Zementkomposition, die Fasern, ein leichtgewichtiges Aggregat und ein wasserabsorbierendes, leichtgewichtiges Pulver, beispielsweise aktiviertes Aluminiumoxid beinhaltet, wobei diese Komposition zur Herstellung von Gebäuden verwendet wird.

Dokument D2 beschreibt einen zementverstärkten, leichten Faserbaustoff, der Perlit, Holz- und Kohlenstoff-Fasern und gegebenenfalls Kautschuk-Latex-Zement und Holzkonstruktionsteile enthält.

Dokument 3 beschreibt einen Bausatz aus Leichtbauteilen, für Wände, Stützen, Decken und sonstige Bauteile sowie eine Leichtbauplatte, wobei der Bausatz aus vorbehandeltem Strohbindemittel geschaffenen Bauteilen besteht.

Ferner beschreibt das Dokument D3 eine Leichtbauplatte, die aus vorbehandeltem Stroh (Strohhalmen) und verfestigtem Bindemittel besteht.

Die Bauteile des vorgenannten Bausatzes können nach einer bevorzugten Ausführungsform mit Luftkammern versehen sein.

Der Erfindung liegt daher die Aufgabe zugrunde, einen Bausatz aus Leichtbauteilen bereitzustellen, die aus umweltfreundlichen, also organischen und mineralischen Baustoffen geschaffen sind, wärmedämmend, schalldämmend und trotz organischen Zuschlagstoffen nicht brennbar, sogar feuerhemmend, wasser- und frostsicher, sowie atmungsaktiv sind und absolut ihre Raumform behalten, nicht schwinden und nicht quellen und den statischen und architektonischen Verhältnissen in ihrer Form angepasst werden können, außerdem so leicht sind, daß sie ohne Einsatz von Hebewerkzeugen und Maschinen leicht montiert werden können. Außerdem sollen diese Bauteile durch ihre Formgebung und die Möglichkeit in der Breite leicht getrennt zu werden, vielfältig, fast uneingeschränkt, einsetzbar sein.

Diese Aufgabe wird bei einem Bausatz der eingangs genannten Gattung erfindungsgemäß dadurch gelöst, daß die Leichtbauteile die Form einer Platte mit dicht durchgezogenen Luftkammern aufweisen, wobei die an der Kante liegenden Luftkammern teilweise oder durchgehend einen Schlitz aufweisen und einige Luftkammern zur besonderen Aussteifung der Platte ein Metallprofil oder Holzprofil aufweisen, das zur Erreichung einer besseren Aussteifung jeweils in die Kammern eingeschoben ist.

Weitere bevorzugte Ausführungsformen vorliegender Erfindung sind in den Unteransprüchen geoffenbart.

Nach einer bevorzugten Ausführungsform ist der erfindungsgemäße Bausatz dadurch gekennzeichnet, daß die Leichtbauteile in Plattenform zur besseren Trennung in der Breite in bestimmten Abständen Schwachstellen aufweisen.

Wieder eine andere Ausführungsform der Erfindung ist dadurch gekennzeichnet, daß der Bausatz auch aus Leichtbauteilen gemäß dem Oberbegriff des Anspruchs 1 besteht, die die Form einer Platte mit dicht durchgezogenen Luftkammern und mit Nut und Feder aufweisen, wobei die Feder und die beiden vorstehenden Plattenteile, die die Nut bilden, ebenfalls mit durchgehenden Luftkammern durchzogen sind, daß einige Luftkammern zur besonderen Aussteifung der Platte ausgebildet sind, indem durch ein Metallprofil oder Holzprofil, welches in die Kammer eingeschoben wird, bessere Aussteifung erreicht wird; und daß die Platte gegebenenfalls zur besseren Trennung in der Breite, in bestimmten Abständen Schwachstellen aufweist.

Ein weitere Ausführungsform ist dadurch gekennzeichnet, daß der Bausatz auch aus Leichtbauteilen gemäß dem Oberbegriff des Anspruchs 1 besteht, die die Form einer Platte mit dicht durchgezogenen Luftkammern und mit zwei gegenseitig angeordneten Falzen aufweisen, welche ebenfalls mit Luftkammern durchzogen sind, jeweils an einem Leichtbauteil vorhanden sind, daß an den Innenkanten des Falzes zwei Nuten angeordnet sind und die Außenkante des Falzvorsprunges von außen abgeschrägt ist, daß einige Luftkammern zur besseren Aussteifung der Platte ausgebildet sind, in dem durch ein Metallprofil oder Holzprofil, welches in diese Kammer eingeschoben wird, bessere Aussteifung erreicht wird und daß die Platte gegebenenfalls zur besseren Trennung in der Breite in bestimmten Abständen Schwachstellen aufweist.

Schließlich ist eine weitere Ausführungsform dadurch gekennzeichnet, daß die Leichtbauteile die Form einer mit Luftkammern durchzogenen U-förmigen Halbschale aufweisen, wobei die äußeren Luftkammern an beiden Schenkeln durchgehende Schlitze aufweisen, daß an den Außenflächen der Schenkel Nuten angebracht sind und daß einige Luftkammern zur besseren Aussteifung der Halbschale Metallprofile oder Holzprofile, welche in die Kammer eingeschoben sind, aufweisen, und daß die Halbschale in der Mitte Schwachstellen zur leichteren Trennung in zwei Winkel aufweist.

Eine weitere Ausführungsform des erfindungsgemäßen Bausatzes ist dadurch gekennzeichnet, daß eine Verblendschale aus Fliesen oder Verblendsteinen und einer Hinterfüllung aus dem Leichtbauteil hergestellt ist und daß die Fliesen oder Verblendsteine im Mörtel des Leichtbauteils eingebettet sind und dadurch großformatige Flächen bilden.

Eine weitere Ausführungsform des erfindungsgemäßen Bausatzes ist dadurch gekennzeichnet, daß die Rückseiten der Verblendschalen perforiert sind.

Wieder eine andere Ausführungsform ist dadurch gekennzeichnet, daß die Leichtbauteile hergestellt sind aus:
a) 20 - 30 Vol.-% unbehandeltem und gehäckseltem Stroh und/oder Spreu und/oder Reisschalen,
b) 10 - 15 Vol.-% feinem Sand bzw. Steinmehl,
c) 20 - 25 Vol.-% Bindemittel wie Zement, Kalkzement oder Gips,
d) 40 - 50 Vol.-% leichten Füllstoffen wie Perlite und/oder Bimsmehl und/oder Blähton,
e) 10 - 15 Vol.-% sauberem Anmachwasser,
f) Gleitmittel für die Extrusion und
g) Verzögerer für die Extrusion.

Schließlich ist eine weitere Ausführungsform dadurch gekennzeichnet, daß die Leichtbauteile hergestellt sind aus:
a) 20 - 30 Vol.-% kurzgebrochenen Stein- oder Glasfasern,
b) 10 - 15 Vol.-% feinem Sand bzw. Steinmehl,
c) 20 - 25 Vol.-% Bindemitteln wie Zement, Kalkzement oder Gips,
d) 40 - 50 Vol.-% leichten Füllstoffen wie Perlite und/oder Bimsmehl und/oder Blähton,
e) 5 - 10 Vol.-% sauberem Anmachwasser,
f) Gleitmittel für die Extrusion,
g) Verzögerer für die Extrusion.

Eine weitere Ausführungsform ist dadurch gekennzeichnet, daß die Leichtbauteile hergestellt sind aus:
a) 10 - 15 Vol.-% unbehandeltem und gehäckseltem Stroh und/oder Spreu und/oder Reisschalen,
b) 10 - 15 Vol.-% kurzgebrochenem Stein-oder Glasfasern,
c) 10 - 15 Vol.-% feinem Sand bzw. Steinmehl,
d) 20 - 25 Vol.-% Bindemittel wie Zement oder Kalkzement oder Gips,
e)40 - 50 Vol.-% leichten Füllstoffen wie Perlite und/oder Bimsmehl und/oder Blähton,
f) 5 - 10 Vol.-% sauberem Anmachwasser,
g) Gleitmittel für die Extrusion,
h) Verzögerer für die Extrusion.

Die Verbindung zwischen den Bauteilen geschieht vorzugsweise durch Verkleben, wobei zur Ausrichtung und zur Befestigung bis zur Verklebung und Verspachtelung Schrauben, Nägel, Klammern oder Doppel-T-Profil verwendet wird. Um eine einwandfreie Verklebung der Bauteile zu erreichen, sind die Nuten im Falz sowie die Abschrägung an der Außenkante des Falzes vorgesehen. Daher werden auch die Verbindungsstellen,welche durch Doppel-T-Profile gehalten werden, mit Keilen so weit wie möglich auseinandergetrieben, um die Fuge möglichst breit zu erhalten, damit der Kleber durchgehend eingepresst werden kann.

Nach Austrocknung des Klebers werden die Keile entfernt und die Fuge wird fein und bündig verspachtelt. Die Hohlräume bzw. die Luftkammern, in denen die Doppel-T-Profile montiert sind, werden nicht verfüllt, vielmehr wird das Doppel-T-Profil gegebenenfalls wieder herausgezogen und an anderer Stelle wiederverwendet.

Das Wesen vorliegender Erfindung wird nun anhand der beispielhaften Zeichnungen, die besonders bevorzugte Ausführungsformen der Erfindung zeigen, weiterhin erläutert:

Es zeigen:

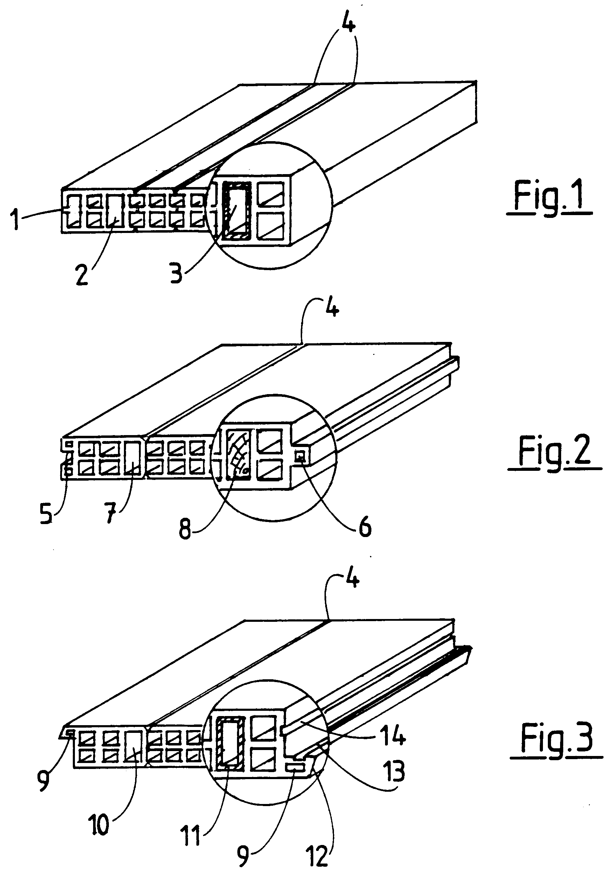

Figur 1 eine Platte als Verblendschale mit Luftkammern, Verbindungsschlitz 1, Luftkammer 2 zur Aussteifung, Aussteifungsprofil aus Metall 3 und Schwach- bzw. Trennstelle 4;
Figur 2 ein Leichtbauteil bzw. eine Verblendschale mit Nut und Feder, Luftkammern seitlich der Nut 5 und in der Feder 6 , Aussteifungskammern 7 sowie Aussteifungsprofil aus Holz 8 und Trennstelle 4;
Figur 3 ein Leichtbauteil bzw. eine Verblendschale mit gegenseitig angeordneten Falzen, deren vorstehende Teile an der Außenkante 12 abgeschrägt und mit Luftkammern 9 durchzogen sind, Aussteifungskammer 10, Aussteifungsprofil aus Metall 11, im Falz angeordnete Nut 13, 14 und Trennstelle 4;

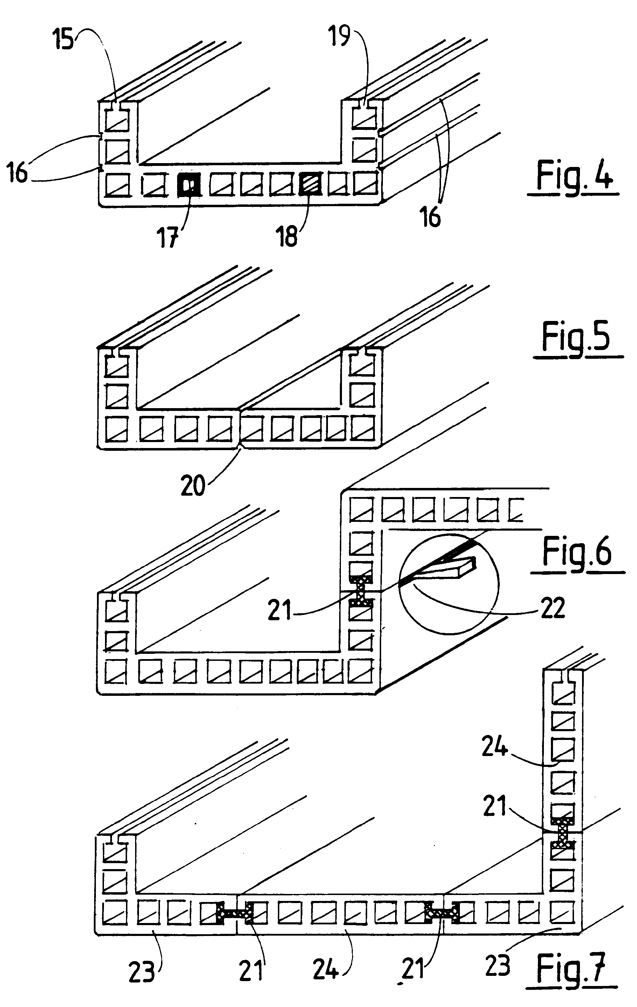

Figur 4 ein U-Profil, welches sich als Schalung für Unterzüge, Betonstürze, Stützen und Wandschalung oder sonstige Verkleidung eignet, Verbindungsschlitze 15, 19,seitliche Nute 16, Aussteifungskammer mit Metallprofil 17 und wahlweise Aussteifungskammer mit Holzprofil 18;
Figur 5 ein U-Profil wie in Figur 4 beschrieben, jedoch mit Schwach- bzw. Trennstelle 20;
Figur 6 zwei gegeneinander stehende mit Doppel-T-Profil 21 gehaltene U-Profile, die einen Unterzug oder Sturz bilden, die Vergrößerung zeigt die Verbindungsstelle 22, die mit einem Keil auseinandergetrieben wird;

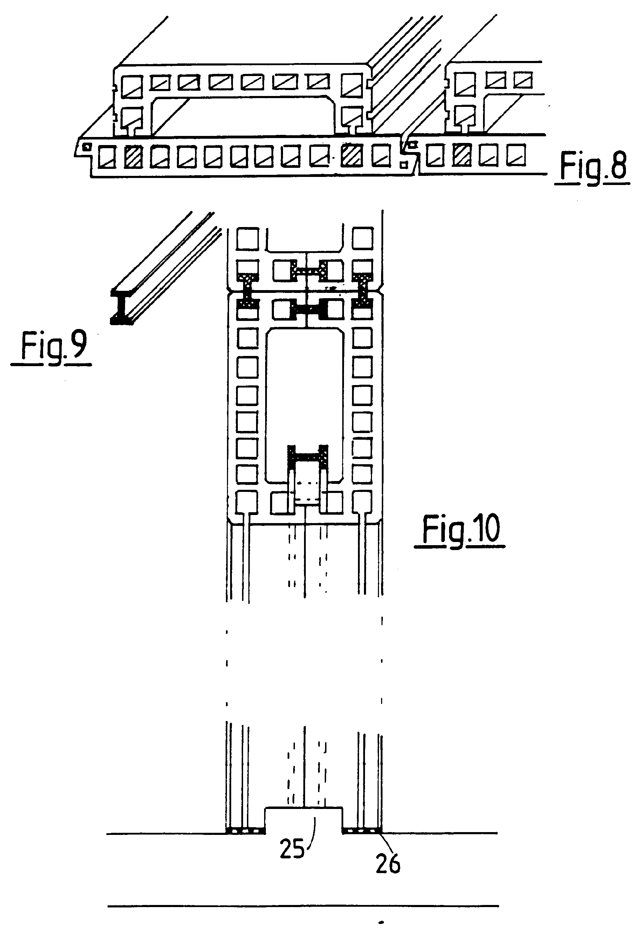

Figur 7 ein in zwei Winkel 23 getrenntes U-Profil, welches durch Halteprofile 21 mit Verblendschalenstreifen 24 verbunden sind und einen relativ breiten und hohen Sturz oder Unterzug bilden,
Figur 8 Leichtbauteile wie in Figur 3 beschrieben und U-Profile, wie in Figur 4 beschrieben, die zusammen ein Deckenbauteil bilden;
Figur 9 ein Doppel-T-Profil, welches als Halteprofil an den Verbindungsstellen montiert wird;
Figur 10 zwei zusammengefügte U-förmige Leichtbauteile wie in Figur 4 beschrieben, die ein Rechteckrohr, welches als Stütze, Stützenschalung, Wandteil, Wandschaltung oder einen Schacht- bzw. Luftkanal bilden. Die so montierten Stützen oder Wandteile können am Boden über einem Sockel 25 in Mörtel eingesetzt werden. Mit dem Bezugszeichen 26 ist das untere, auf dem Boden aufstehende Ende des Rechteckrohrs bezeichnet.

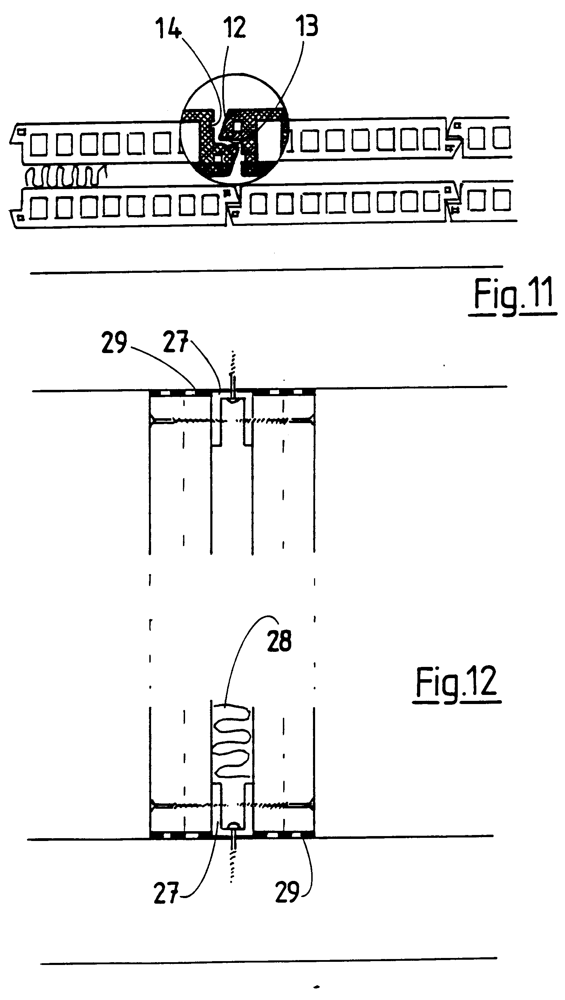

Figur 11 zeigt im Grundriß eine zweischalige Wand aus Verblendschalen, wie in Figur 3 beschrieben, mit gegenüberliegendem Falz. Die Vergrößerung zeigt die im Falz angeordnete Nut 13, 14, sowie die abgeschrägte Außenkante des Falzvorsrungs 12;
Figur 12 eine zweischalige Wand, bestehen aus zwei Verblendschalen und Metallprofilen 27, die am Boden und an der Decke angebracht sind, sowie dazwischenliegender Isolierung 28 die als Wärme- oder Schalldämmung dient. Anschluß an der Decke und am Boden wird durch Ausbildung einer Fuge 29 hergestellt;

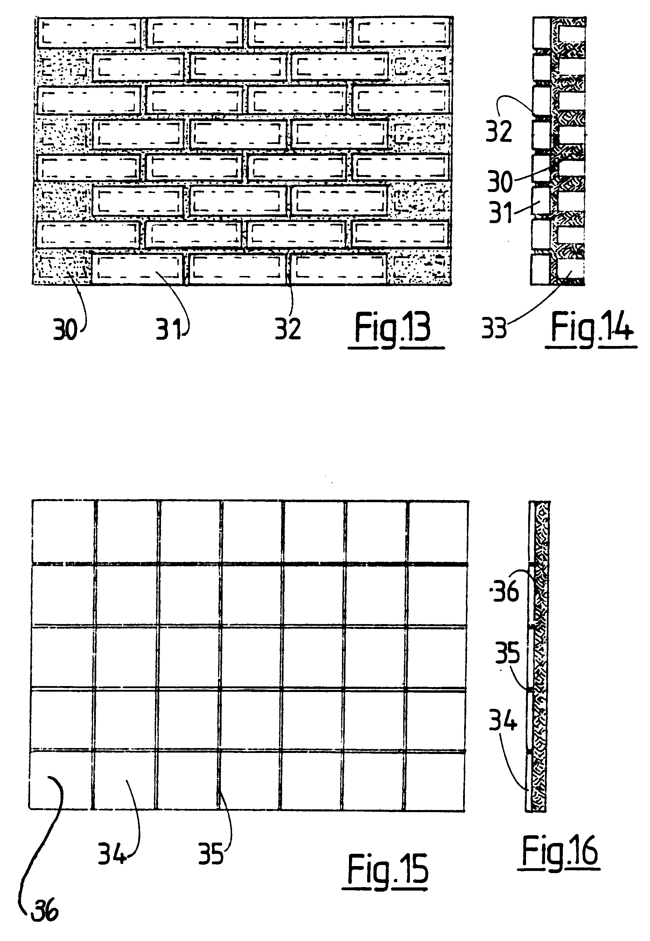

Figur 13 eine verzahnte Verblendschale aus Verblendsteinen 31 mit Hinterfüllung 30 sowie fertige Verfugung 32 und die Hohlkammer 33;
Figur 14 zeigt die Verblendschale im Schnitt;
Figur 15 eine Verblendschale aus Fliesen 34 mit fertigen Fugen 35 und Hinterlüftung 36 und
Figur 16 eine Verblendschale aus Fliesen 34 im Schnitt mit Hinterfüllung 36, Fliesen und ausgeführten Fugen 35.

All die vorgenannten Profilbeispiele weise hervorragende Wärme- und Schalldämmungseigenschaften auf und lassen sich je nach statischen Erfordernissen in ihrer Formgebung verändern. Selbstverständlich besteht die Möglichkeit, alle Bauteile an den entsprechenden Fronten mit verschiedenen Materialien zu beschichten oder zu verkleiden, die den Witterungsverhältnissen und den optischen Vorstellungen entsprechen.

Die vorliegende Erfindung schafft Leichtbauteile z.B. Verblendschalen, die jetzt und in Zukunft höchste Anforderungen an Schall-, Wärme- und Brandschutz in wirtschaftlichster Form erfüllen.

## Patentansprüche

1. Bausatz aus extrudierten Leichtbauteilen für Wände, Stützen, Decken und sonstige Bauteile, bestehend aus
a) unbehandeltem gehäckseltem Stroh und/oder Getreidespreu und/oder Reisschalen und/oder Steinfasern und/oder Glasfasern,
b) Bindemittel, nämlich Zement und/oder Kalk und/oder Gips und
c) mineralischen Zuschlagstoffen,
dadurch gekennzeichnet,
daß die Leichtbauteile die Form einer Platte mit dicht durchgezogenen Luftkammern (2) aufweisen, wobei die an der Kante liegenden Luftkammern (2) teilweise oder durchgehend einen Schlitz (1,15) aufweisen und einige Luftkammern (2) zur besonderen Aussteifung der Platte ein Metallprofil (3,11) oder Holzprofil (8) aufweisen, das zur Erreichung einer besseren Aussteifung jeweils in die Kammern eingeschoben ist.

2. Bausatz nach Anspruch 1,
dadurch gekennzeichnet,
daß die Leichtbauteile in Plattenform (2) zur besseren Trennung in der Breite in bestimmten Abständen Schwachstellen (4) aufweisen.

3. Bausatz nach Anspruch 1 - 2,
dadurch gekennzeichnet,
daß der Bausatz auch aus Leichtbauteilen gemäß dem Oberbegriff des Anspruchs 1 besteht, die die Form einer Platte mit dicht durchgezogenen Luftkammern (2) und mit Nut (5) und Feder (6) aufweisen, wobei die Feder (6) und die beiden vorstehenden Plattenteile, die die Nut (5) bilden, ebenfalls mit durchgehenden Luftkammern (2) durchzogen sind, daß einige Luftkammern (2) zur besonderen Aussteifung der Platte ausgebildet sind, indem durch ein Metallprofil (8) oder Holzprofil (8), welches in die Kammer (2) eingeschoben wird, bessere Aussteifung erreicht wird; und daß die Platte gegebenenfalls zur besseren Trennung in der Breite, in bestimmten Abständen Schwachstellen (4) aufweist.

4. Bausatz nach Anspruch 1 - 3,
dadurch gekennzeichnet,
daß der Bausatz auch aus Leichtbauteilen gemäß dem Oberbegriff des Anspruchs 1 besteht, die die Form einer Platte mit dicht durchgezogenen Luftkammern (2) und mit zwei gegenseitig angeordneten Falzen aufweisen, welche ebenfalls mit Luftkammern (9) durchzogen sind, jeweils an einem Leichtbauteil
vorhanden sind, daß an den Innenkanten des Falzes zwei Nuten (13,14) angeordnet sind und die Außenkante (12) des Falzvorsprunges von außen abgeschrägt ist, daß einige Luftkammern zur besseren Aussteifung der Platte ausgebildet sind, in dem durch ein Metallprofil (11) oder Holzprofil (11), welches in diese Kammer eingeschoben wird, bessere Aussteifung erreicht wird und daß die Platte gegebenenfalls zur besseren Trennung in der Breite in bestimmten Abständen Schwachstellen (4) aufweist.

5. Bausatz nach Anspruch 1,
dadurch gekennzeichnet,
daß die Leichtbauteile die Form einer mit Luftkammern durchzogenen U-förmigen Halbschale aufweisen, wobei die äußeren Luftkammern an beiden Schenkeln durchgehende Schlitze (15,19) aufweisen, daß an den Außenflächen der Schenkel Nuten (16) angebracht sind und daß einige Luftkammern zur besseren Aussteifung der Halbschale Metallprofile (17) oder Holzprofile (19), welche in die Kammer eingeschoben sind, aufweisen, und daß die Halbschale in der Mitte Schwachstellen (20) zur leichteren Trennung in zwei Winkel aufweist.

6. Bausatz nach Anspruch 1 - 5,
dadurch gekennzeichnet,
daß eine Verblendschale aus Fliesen (34) oder Verblendsteinen (31) und einer Hinterfüllung (30) aus dem Leichtbauteil hergestellt ist und daß die Fliesen oder Verblendsteine im Mörtel des Leichtbauteils eingebettet sind und dadurch großformatige Flächen bilden.

7. Bausatz nach Anspruch 6,
dadurch gekennzeichnet,
daß die Rückseiten der Verblendschalen perforiert sind.

8. Bausatz nach Anspruch 1 - 7,
dadurch gekennzeichnet,
daß die Leichtbauteile hergestellt sind aus:
a) 20 - 30 Vol.-% unbehandeltem und gehäckseltem Stroh und/oder Spreu und/oder Reisschalen,
b) 10 - 15 Vol.-% feinem Sand bzw. Steinmehl,
c) 20 - 25 Vol.-% Bindemittel wie Zement, Kalkzement oder Gips,
d) 40 - 50 Vol.-% leichten Füllstoffen wie Perlite und/oder Bimsmehl und/oder Blähton,
e) 10 - 15 Vol.-% sauberem Anmachwasser,
f) Gleitmittel für die Extrusion und
g) Verzögerer für die Extrusion.

9. Bausatz nach Anspruch 1 - 7,
dadurch gekennzeichnet,
daß die Leichtbauteile hergestellt sind aus:
a) 20 - 30 Vol.-% kurzgebrochenen Stein- oder Glasfasern,
b) 10 - 15 Vol.-% feinem Sand bzw. Steinmehl,
c) 20 - 25 Vol.-% Bindemitteln wie Zement, Kalkzement oder Gips,
d) 40 - 50 Vol.-% leichten Füllstoffen wie Perlite und/oder Bimsmehl und/oder Blähton,
e) 5 - 10 Vol.-% sauberem Anmachwasser,
f) Gleitmittel für die Extrusion,
g) Verzögerer für die Extrusion.

10. Bausatz nach Anspruch 1 - 7,
dadurch gekennzeichnet,
daß die Leichtbauteile hergestellt sind aus:
a) 10 - 15 Vol.-% unbehandeltem und gehäckseltem Stroh und/oder Spreu und/oder Reisschalen,
b) 10 - 15 Vol.-% kurzgebrochenem Stein-oder Glasfasern,
c) 10 - 15 Vol.-% feinem Sand bzw. Steinmehl,
d) 20 - 25 Vol.-% Bindemittel wie Zement oder Kalkzement oder Gips,
e)40 - 50 Vol.-% leichten Füllstoffen wie Perlite und/oder Bimsmehl und/oder Blähton,
f) 5 - 10 Vol.-% sauberem Anmachwasser,
g) Gleitmittel für die Extrusion,
h) Verzögerer für die Extrusion.

## Claims

1. A kit of extruded light-weight structural components for walls, columns, ceilings and other structural components, comprising
a) untreated chopped straw and/or cereal chaff and/or rice husks and/or stone fibres and/or glass fibres;
b) binding agent, i.e. cement and/or lime and/or gypsum, and
c) mineral aggregates,
characterised in that the light-weight structural components are in the form of a board with air chambers (2) passing fluidtightly therethrough, wherein the air chambers (2) situated at the edge have a partial or continuous slot (1, 15) and some of the air chambers (2) have for particular reinforcement of the board a metal section element (3, 11) or a timber section element (8) which is inserted into respective chambers so as to provide improved reinforcement.

2. A kit according to Claim 1, characterised in that the light-weight structural components in board form (2) have weakened points (4) at given distances apart for facilitating separation widthwise.

3. A kit according to Claims 1 and 2, characterised in that the kit also comprises light-weight structural components in accordance with the preamble of Claim 1, which have the form of a board with air chambers (2) passing fluidtightly therethrough and with a groove (5) and tongue (6), wherein the tongue (6) and the two protruding board parts forming the groove (5) are also traversed by continuous air chambers (2), in that some of the air chambers (2) are designed for particular reinforcement of the board, in that improved reinforcement is achieved by a metal section element (8) or a timber section element (8) which is inserted into the chamber (2), and in that the board has optionally for facilitating separation widthwise weakened points (4) at given distances apart.

4. A kit according to Claims 1 to 3, characterised in that the kit also comprises light-weight structural components in accordance with the preamble of Claim 1, which have the form of a board with air chambers (2) passing fluidtightly therethrough and with two oppositely arranged rebates, which are also traversed by air chambers (9), provided on each light-weight structural component, in that two grooves (13, 14) are provided on the inner edges of the rebate and the outer edge (12) of the rebate projection is outwardly bevelled, in that some of the air chambers (2) are designed for improved reinforcement of the board, in that improved reinforcement is achieved by a metal section element (11) or a timber section element (11) which is inserted into this chamber, and in that the board has optionally for facilitating separation widthwise weakened points (4) at given distances apart.

5. A kit according to Claim 1, characterised in that the light-weight structural components are in the form of a U-shaped half shell traversed by air chambers, wherein the outer air chambers in both arms have continuous slots (15, 19), in that grooves (16) are provided on the outer surfaces of the arms and in that for improved reinforcement of the half shell some air chambers (2) have metal section elements (17) or timber section elements (19) which are inserted into the chamber, and in that in its centre the half shell has weakened points (20) for easier separation at two angles.

6. A kit according to Claims 1 to 5, characterised in that a facing sheet of tiles (34) or facing bricks (31) and a back fill (30) is produced from the light-weight structural component and in that the tiles or facing bricks are embedded in the mortar of the light-weight structural component and thereby form large-area surfaces.

7. A kit according to Claim 6, characterised in that the rear sides of the facing sheets are perforated.

8. A kit according to Claims 1 to 7, characterised in that the light-weight structural components are produced from:
a) 20 - 30 % by volume of untreated and chopped straw and/or chaff and/or rice husks,
b) 10 - 15 % by volume of fine sand or rock dust,
c) 20 - 25 % by volume of binding agent, such as cement, lime cement or gypsum,
d) 40 - 50 % by volume of light fillers, such a perlite and/or pumice dust and/or expanded clay,
e) 10 - 15 % by volume of clean mixing water,
f) lubricant for the extrusion and
g) retarder for the extrusion.

9. A kit according to Claims 1 to 7, characterised in that the light-weight structural components are produced from:
a) 20 - 30 % by volume of finely crushed stone or glass fibres,
b) 10 - 15 % by volume of fine sand or rock dust,
c) 20 - 25 % by volume of binding agent, such as cement, lime cement or gypsum,
d) 40 - 50 % by volume of light fillers, such as perlite and/or pumice dust and/or expanded clay,
e) 5 - 10 % by volume of clean mixing water,
f) lubricant for the extrusion and
g) retarder for the extrusion.

10. A kit according to Claims 1 to 7, characterised in that the light-weight structural components are produced from:
a) 10 - 15 % by volume of untreated and chopped straw and/or chaff and/or rice husks,
b) 10 - 15 % by volume of finely crushed stone or glass fibres,
c) 10 - 15 % by volume of fine sand or rock dust,
d) 20 - 25 % by volume of binding agent, such as cement or lime cement or gypsum,
e) 40 - 50 % by volume of light fillers, such as perlite and/or pumice dust and/or expanded clay,
f) 5 - 10 % by volume of clean mixing water,
g) lubricant for the extrusion and
h) retarder for the extrusion.

## Revendications

1. Lot de construction constitué d'éléments de construction légère extrudés, destinés à des murs, des appuis, des planchers et autres éléments de construction et réalisés à partir de :
a) paille hachée non traitée et/ou bourrier et/ou écorces de riz et/ou fibres de roche et/ou fibres de verre,
b) liant, à savoir ciment et/ou chaux et/ou plâtre, et
c) additifs minéraux,
**caractérisé** en ce que les éléments de construction légère présentent la forme d'un panneau à grande densité de compartiments creux traversants (2), les compartiments creux (2) situés sur les bords présentant une fente (15) sur toute ou une partie de leur longueur et, en vue d'un renforcement particulier du panneau, certains compartiments creux (2) présentant un profilé métallique (3, 11) ou un profilé en bois (8), qui est enfilé dans le compartiment respectif afin d'améliorer la raideur.

2. Lot de construction selon la revendication 1, **caractérisé** en ce que les éléments de construction légère sous forme de panneaux présentent, afin de faciliter leur fractionnement en largeur, des zones affaiblies (4) à intervalles donnés.

3. Lot de construction selon la revendication 1 ou 2, **caractérisé** en ce que le lot est également constitué d'éléments de construction légère selon le préambule de la revendication 1, qui présentent la forme d'un panneau à grande densité de compartiments creux traversants (2) et muni d'une rainure (5) et d'une languette (6), la languette (6) et les deux parties saillantes du panneau qui constituent la rainure (5) étant également traversées de bout en bout par des compartiments creux (2), en ce que certains compartiments creux (2) sont conçus en vue d'un renforcement particulier du panneau, par le fait qu'une raideur améliorée est obtenue au moyen d'un profilé métallique (3, 11) ou d'un profilé en bois (8) qui est enfilé dans le compartiment (2), et en ce que le panneau présente éventuellement, afin de faciliter son fractionnement en largeur, des zones affaiblies (4) à intervalles donnés.

4. Lot de construction selon l'une quelconque des revendications 1 à 3, **caractérisé** en ce que le lot est également constitué d'éléments de construction légère selon le préambule de la revendication 1, qui présentent la forme d'un panneau à grande densité de compartiments creux traversants (2) et muni de deux tenons d'emboîtement mutuellement opposés, qui sont également traversés par des compartiments creux (9) et sont présents sur chaque élément de construction légère, en ce que deux rainures (13, 14) sont pratiquées sur les bords intérieurs du tenon et le bord extérieur (12) en saillie du tenon est chanfreiné de l'extérieur, en ce que certains compartiments creux sont conçus en vue d'un renforcement amélioré du panneau, par le fait qu'une raideur améliorée est obtenue au moyen d'un profilé métallique (11) ou d'un profilé en bois qui est enfilé dans ces compartiments, et en ce que le panneau présente éventuellement, afin de faciliter son fractionnement en largeur, des zones affaiblies (4) à intervalles donnés.

5. Lot de construction selon la revendication 1, **caractérisé** en ce que les éléments de construction légère présentent la forme d'une demi-cloison en U traversée par des compartiments creux, les compartiments creux extérieurs des deux branches présentant des fentes (15, 19) sur toute leur longueur, en ce que des rainures (16) sont pratiquées sur les faces extérieures des branches, en ce qu'en vue d'un renforcement amélioré de la demi-cloison, certains compartiments creux présentent des profilés métalliques (17) ou des profilés ou bois (18) qui sont enfilés dans ces compartiments, et en ce que la demi-cloison présente en son milieu une zone affaiblie (20) afin de faciliter son fractionnement en deux équerres.

6. Lot de construction selon l'une quelconque des revendications 1 à 5, **caractérisé** en ce qu'une cloison de parement est réalisée à partir de carreaux (34) ou de briques de parement (31) et d'une semelle constituée de l'élément de construction légère, et en ce que les carreaux ou briques de parement sont encastrés dans le mortier de l'élément de construction légère et forment ainsi des surfaces de grande taille.

7. Lot de construction selon la revendication 6, **caractérisé** en ce que les côtés arrière des cloisons de parement sont perforés.

8. Lot de construction selon l'une quelconque des revendications 1 à 7, **caractérisé** en ce que les éléments de construction légère sont réalisés à partir de :
a) 20 à 30 % en volume de paille hachée et non traitée et/ou de bourrier et/ou d'écorces de riz,
b) 10 à 15 % en volume de sable fin ou de poudre de roche,
c) 20 à 25 % en volume de liant tel que ciment, mortier de chaux et de ciment ou plâtre,
d) 40 à 50 % en volume de charges légères telles que perlite et/ou farine de ponce et/ou argile expansée,
e) 10 à 15 % en volume d'eau propre de gâchage,
f) agent antifriction pour l'extrusion et
g) retardateur pour l'extrusion.

9. Lot de construction selon l'une quelconque des revendications 1 à 7, **caractérisé** en ce que les éléments de construction légère sont réalisés à partir de :
a) 20 à 30 % en volume de fibres broyées de roche ou de verre,
b) 10 à 15 % en volume de sable fin ou de poudre de roche,
c) 20 à 25 % en volume de liants tels que ciment, mortier de chaux et de ciment ou plâtre,
d) 40 à 50 % en volume de charges légères telles que perlite et/ou farine de ponce et/ou argile expansée,
e) 5 à 10 % en volume d'eau propre de gâchage,
f) agent antifriction pour l'extrusion,
g) retardateur pour l'extrusion.

10. Lot de construction selon l'une quelconque des revendications 1 à 7, **caractérisé** en ce que les éléments de construction légère sont réalisés à partir de :
a) 10 à 15 % en volume de paille hachée et non traitée et/ou de bourrier et/ou d'écorces de riz,
b) 10 à 15 % en volume de fibres broyées de roche ou de verre,
c) 10 à 15 % en volume de sable fin ou de poudre de roche,
d) 20 à 25 % en volume de liant tel que ciment ou mortier de chaux et de ciment ou plâtre,
e) 40 à 50 % en volume de charges légères telles que perlite et/ou farine de ponce et/ou argile expansée,
f) 5 à 10 % en volume d'eau propre de gâchage,
g) agent antifriction pour l'extrusion,
h) retardateur pour l'extrusion.
